# EUROPEAN PATENT APPLICATION

(11) **EP 2 293 311 A2**
(43) Date of publication of application: **09.03.2011**
(21) Application number: 10171063.0
(22) Date of filing: 28.07.2010
(51) Int. Cl.: H01G 9/20

(54) **Dye-sensitized solar cell**

(30) Priority: 02.09.2009 JP 2009202755
(71) Applicant: Nitto Denko Corporation, Ibaraki-shi Osaka (JP)
(72) Inventor: Inoue, Shinichi, Osaka 567-8680 (JP); Hanazono, Hiroyuki, Osaka 567-8680 (JP)
(74) Representative: HOFFMANN EITLE

(57) **Abstract**

The dye-sensitized solar cell includes a working electrode, a counter electrode that is disposed to face the working electrode with a space therebetween, and an electrolyte that fills in between the working electrode and the counter electrode. The counter electrode includes a substrate having a reflectance of 30% or more at at least one wavelength in the range of 400 to 750 nm.

## Description

### BACKGROUND OF THE INVENTION

### Field of the Invention

The present invention relates to a dye-sensitized solar cell, to be specific, to a dye-sensitized solar cell that is suitably used as a solar cell that achieves an improvement in power generation efficiency with a simple structure.

### Description of the Related Art

In recent years, a dye-sensitized solar cell in which a dye-sensitized semiconductor is used has been proposed as a new solar cell that may replace silicon-based solar cells in view of mass production and cost reduction.

A dye-sensitized solar cell usually has a working electrode (anode) having a photosensitizing function, an opposing electrode (counter electrode, cathode) that is disposed to face the working electrode with a space therebetween, and a liquid electrolyte that fills in between the two electrodes. In dye-sensitized solar cells, electrons generated in the working electrode based on irradiation by sunlight migrate to the counter electrode via wirings, and the electrons are given and received in the liquid electrolyte between the two electrodes.

In such dye-sensitized solar cells, the working electrode is composed of a substrate (anode-side substrate), a transparent conductive film that is laminated onto the surface of the substrate, and a dye-sensitized semiconductor that is laminated onto the surface of the conductive film and to which dyes are adsorbed; and the opposing electrode is composed of a substrate (cathode-side substrate), a conductive film that is laminated onto the surface of the substrate, and a catalyst layer laminated onto the surface of the conductive film.

It has been also proposed, in view of an improvement in power generation efficiency, that a light reflection layer or light scattering reflection layer is provided above or below the anode-side substrate to allow sunlight that was transmitted through the working electrode and reached the counter electrode to be reflected at the light reflection layer or light scattering reflection layer, and the reflected light is used again for electron generation in the working electrode (see, for example, Japanese Unexamined Patent Publication No. 2005-158379, and Japanese Unexamined Patent Publication No. 2000-348784).

### SUMMARY OF THE INVENTION

However, the dye-sensitized solar cells of Japanese Unexamined Patent Publication No. 2005-158379 and Japanese Unexamined Patent Publication No. 2000-348784 are disadvantageous because the light reflection layer and the light scattering reflection layer have to be provided additionally, which makes the counter electrode structure complicated. Also, because steps for producing the light reflection layer and the light scattering reflection layer are further needed, a disadvantage of an increase in production costs arises.

An object of the present invention is to provide a dye-sensitized solar cell that achieves an improvement in power generation efficiency as well as further low-costs with a simple structure.

The dye-sensitized solar cell of present invention includes a working electrode, a counter electrode that is disposed to face the working electrode with a space therebetween, and an electrolyte that fills in between the working electrode and the counter electrode, wherein the counter electrode includes a substrate having a light reflectance of 30% or more at at least one wavelength in the range of 400 to 750 nm.

It is preferable that in the dye-sensitized solar cell of the present invention, the substrate is a flexible film formed of a liquid crystal polymer.

It is preferable that in the dye-sensitized solar cell of the present invention, the substrate is a flexible film in which a fine-powder filler is dispersed, and that the fine-powder filler is titanium oxide.

In the dye-sensitized solar cell according to the present invention, the counter electrode includes a substrate that has a light reflectance at a specific wavelength in a specific range. Therefore, sunlight containing light of a specific wavelength can be reflected at the counter electrode with excellent efficiency, and the reflected sunlight can be used again for electron generation in the working electrode. As a result, power generation efficiency can be improved.

Furthermore, because the substrate has a reflectance of a specific range, the light reflection layer or light scattering reflection layer does not have to be provided additionally, and power generation efficiency can be improved with a simple structure. Therefore, steps for producing the light reflection layer or light scattering reflection layer can be omitted, and power generation efficiency as well as further low-costs can be achieved with a simple structure.

### Brief Description of the Drawings

FIG. 1 shows a cross-sectional view of an embodiment of the dye-sensitized solar cell of the present invention (an embodiment in which a cathode-side substrate exposing from a catalyst layer is in contact with an electrolyte).

FIG. 2 shows a cross-sectional view of a counter electrode (an embodiment in which a cathode-side substrate, a cathode-side conductive layer, and a catalyst layer are included) of the dye-sensitized solar cell shown in FIG. 1.

FIG. 3 shows a cross-sectional view of a counter electrode (an embodiment in which a cathode-side substrate and a cathode-side conductive layer are included) in another embodiment of the dye-sensitized solar cell of the present invention.

FIG. 4 shows a cross-sectional view of another embodiment of the dye-sensitized solar cell of the present invention (an embodiment in which a cathode-side conductive layer is interposed between a cathode-side substrate and an electrolyte).

FIG. 5 shows a cross-sectional view of another embodiment of the dye-sensitized solar cell of the present invention (an embodiment in which a left-side portion of the upper face of a cathode-side substrate exposing from a catalyst layer is in contact with an electrolyte, and right side faces of the cathode-side conductive layer and the catalyst layer are in contact with a sealing layer).

FIG. 6 shows a cross-sectional view of another embodiment of the dye-sensitized solar cell of the present invention (an embodiment in which a left-side portion of the upper face of a cathode-side substrate exposing from a catalyst layer is in contact with an electrolyte, and a right side face of the catalyst layer is in contact with a sealing layer).

FIG. 7 shows a cross-sectional view of another embodiment of the dye-sensitized solar cell of the present invention (an embodiment in which anode-side conductive layers and cathode-side conductive layers are connected to current collecting wirings).

FIG. 8 shows a graph of the light reflectance of the cathode-side substrates of Examples and Comparative Examples at a wavelength of 300 to 800 nm.

### DETAILED DESCRIPTION OF THE INVENTION

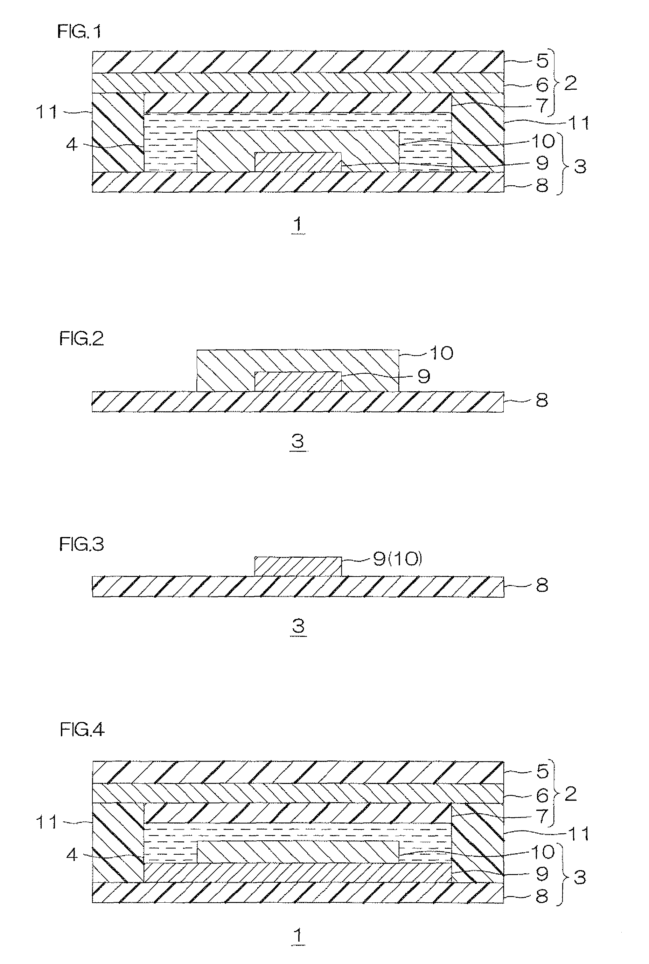

FIG. 1 shows a cross-sectional view of an embodiment of the dye-sensitized solar cell of the present invention (an embodiment in which a cathode-side substrate exposing from a catalyst layer is in contact with an electrolyte); and FIG. 2 shows a cross-sectional view of a counter electrode (an embodiment in which a cathode-side substrate, a cathode-side conductive layer, and a catalyst layer are included) of the dye-sensitized solar cell shown in FIG. 1.

In FIG. 1, a dye-sensitized solar cell 1 includes a working electrode 2 (anode); a counter electrode (cathode, opposing electrode) 3 that is disposed to face the working electrode 2 in the thickness direction of the electrodes (up and down directions in FIG. 1) with a space therebetween; and an electrolyte 4 that fills in between the working electrode 2 and the counter electrode 3.

The working electrode 2 has a photosensitizing function, and is formed in a substantially flat plate shape. The working electrode 2 includes an anode-side substrate 5, an anode-side conductive layer 6 laminated below the anode-side substrate 5, and a dye-sensitized semiconductor layer 7 laminated below the anode-side conductive layer 6.

The anode-side substrate 5 is transparent, and is formed in a flat plate shape. For example, the anode-side substrate 5 is formed from an insulating plate or an insulating film including a rigid plate such as a glass substrate and a flexible film (excluding a liquid crystal polymer film, a filler-dispersed film, and a filler-dispersed liquid crystal polymer film to be mentioned later) such as a plastic film.

Examples of the plastic material for the plastic film include polyester resins (excluding thermotropic liquid crystal polyester and thermotropic liquid crystal polyester amide to be mentioned later) such as polyethylene terephthalate (PET), polybutylene terephthalate, and polyethylene-2,6-naphthalate (PEN); acrylic resins such as polyacrylate and polymethacrylate; olefin resins such as polyethylene (PE such as high density PE, low density PE, etc.), polypropylene, and an ethylene-propylene copolymer; vinyl resins such as polyvinyl chloride, an ethylene-vinyl acetate copolymer, and an ethylene-vinylalcohol copolymer; imide resins such as polyimide and polyamide-imide; and ether resins such as palyethernitrile and polyethersulfone. These plastic materials may be used alone, or may be used in combination of two or more.

The thickness of the anode-side substrate 5 is, for example, 5 to 500 µm, or preferably 10 to 400 µm.

The anode-side substrate 5 transmits sunlight (to be specific, visible light, etc.). To be specific, the anode-side substrate 5 has a light transmittance of, for example, 70% or more, preferably 80% or more, or more preferably 90% or more, and usually 99.9% or less, at at least one wavelength in the range of 400 to 750 nm.

The anode-side conductive layer 6 is composed of, for example, a transparent conductive thin film, and is formed below the entire lower face of the anode-side substrate 5.

Examples of the conductive materials that form the transparent conductive thin film include metal materials such as gold, silver, copper, platinum, nickel, tin, and aluminum; metal oxide (composite oxide) materials such as tin-doped indium oxide (ITO), fluorine-doped tin oxide (FTO), and zinc-doped indium oxide (IZO); and a carbon material such as carbon. These conductive materials may be used alone, or may be used in combination of two or more.

The resistivity of the anode-side conductive layer 6 is, for example, 1.0 × 10⁻²Ω · cm or less, or preferably 1.0 × 10⁻³Ω · cm or less.

The thickness of the anode-side conductive layer 6 is, for example, 0.01 to 100 µm, or preferably 0.1 to 10 µm.

The anode-side conductive layer 6 has a light transmittance of, for example, 70% or more, preferably 80% or more, or more preferably 90% or more, and usually 99.9% or less, at at least one wavelength in the range of 400 to 750 nm.

The dye-sensitized semiconductor layer 7 is formed below the lower face and at a widthwise (the left and right directions in FIG. 1) middle portion of the anode-side conductive layer 6. That is, the dye-sensitized semiconductor layer 7 is formed so that both widthwise end portions of the anode-side conductive layer 6 are exposed.

The dye-sensitized semiconductor layer 7 is formed by laminating dye-sensitized semiconductor particles into a sheet (film). Such dye-sensitized semiconductor particles are, for example, porous semiconductor particles composed of metal oxide to which dye is adsorbed.

Examples of the metal oxide include titanium oxide, zinc oxide, tin oxide, tungsten oxide, zirconium oxide, hafnium oxide, strontium oxide, indium oxide, yttrium oxide, lanthanum oxide, vanadium oxide, niobium oxide, tantalum oxide, chromic oxide, molybdenum oxide, iron oxide, nickel oxide, and silver oxide. A preferable example is titanium oxide.

The dye is, for example, a substance that has an absorption peak in the sunlight range, to be specific, visible light including light having a wavelength in the range of 400 to 750 nm. Specific examples of the dye include metal complexes such as a ruthenium complex and a cobalt complex; and organic dyes such as a cyanine dye, a merocyanine dye, a phthalocyanine dye, a coumarin dye, a riboflavin dye, a xanthene dye, a triphenylmethane dye, an azo dye, and a quinone dye. Preferable examples are a ruthenium complex and a merocyanine dye.

The average particle size of the dye-sensitized semiconductor particles is, on the primary particle size basis, for example, 5 to 200 nm, or preferably 8 to 100 nm.

The thickness of the dye-sensitized semiconductor layer 7 is, for example, 0.4 to 100 µm, preferably 0.5 to 50 µm, or more preferably 0.5 to 15 µm.

The dye-sensitized semiconductor layer 7 has a light transmittance of, for example, 90% or less, or preferably 70% or less, and generally 50% or less at at least one wavelength in the range of 400 to 750 nm.

The thickness of the working electrode 2 is, for example, 5 to 1000 µm, or preferably 10 to 500 µm.

The working electrode 2 has a light transmittance of, for example, 30% or more, preferably 50% or more, or more preferably 70% or more, and usually 99.9% or less, at at least one wavelength in the range of 400 to 750 nm, although the transmittance is appropriately selected according to the area proportion of the dye-sensitized semiconductor layer 7 relative to the anode-side substrate 5.

The counter electrode 3, which is to be described in detail later, is formed in a substantially flat plate shape.

The electrolyte 4 is prepared, for example, as a solution in which the electrolyte is dissolved in a solvent (liquid electrolyte), or as a gel electrolyte obtained by gelling such a solution.

The electrolyte 4 includes, as essential components, iodine, and/or a combination of iodine and an iodine compound (redox system).

Examples of the iodine compound include metal iodides such as lithium iodide (LiI), sodium iodide (NaI), potassium iodide (KI), cesium iodide (CsI), and calcium iodide (CaI₂); and organic quaternary ammonium iodide salts such as tetraalkyl ammonium iodide, imidazolium iodide, and pyridinium iodide.

The electrolyte 4 may also include, as optional components, for example, a halogen (excluding iodine) such as bromine; or a combination of a halogen and a halogen compound (excluding a combination of iodine and an iodine compound) such as a combination of bromine and a bromine compound.

Examples of the solvent include organic solvents, and an aqueous solvent such as water. Examples of the organic solvents include carbonate compounds such as dimethyl carbonate, diethyl carbonate, methyl ethyl carbonate, ethylene carbonate, and propylene carbonate; ester compounds such as methyl acetate, methyl propionate, and gamma-butyrolactone; ether compounds such as diethylether, 1,2-dimethoxyethane, 1,3-dioxolane, tetrahydrofuran, 2-methyltetrahydrofuran; heterocyclic compounds such as 3-methyl-2-oxazolidinone, and 2-methylpyrrolidone; nitrile compounds such as acetonitrile, methoxyacetonitrile, propionitrile, and 3-methoxypropionitrile; and aprotic polar compounds such as sulfolane, dimethyl sulfoxide, and dimethylformamide. A preferable example is an organic solvent, and a more preferable example is a nitrile compound.

The proportion of the electrolyte content is, for example, 0.001 to 10 parts by weight, or preferably 0.01 to 1 part by weight relative to 100 parts by weight of the liquid electrolyte. The electrolyte concentration (normality) may be set to, for example, 0.001 to 10M, or preferably 0.01 to 1M, although depending on the molecular weight of the electrolyte.

The gel electrolyte is prepared by adding, for example, a known gelling agent at an appropriate ratio into a liquid electrolyte.

Examples of the gelling agent include a low molecular weight gelling agent such as a natural higher fatty acid, and polysaccharides such as amino acid compounds; and a high molecular weight gelling agent such as a fluorine-based polymer (e.g., polyvinylidene fluoride, a vinylidene fluoride-hexafluoropropylene copolymer, etc.), and a vinyl-based polymer (e.g., polyvinyl acetate, polyvinyl alcohol, etc.).

The thickness of the electrolyte 4 after filling is, for example, 5 to 500 µm, or preferably 5 to 100 µm.

The electrolyte 4 has a light transmittance of, for example, 5% or more, and usually 95% or less, at at least one wavelength in the range of 400 to 750 nm.

The dye-sensitized solar cell 1 is also provided with a sealing layer 11 for sealing in the electrolyte 4 between the working electrode 2 and the counter electrode 3.

The sealing layer 11 fills in between the working electrode 2 and the counter electrode 3, at both widthwise end portions of the dye-sensitized solar cell 1. The sealing layer 11 is disposed adjacent to and at both outer side faces of the dye-sensitized semiconductor layer 7.

Examples of the sealing material that forms the sealing layer 11 include a silicone resin, an epoxy resin, a polyisobutylene-based resin, a hot-melt resin, and fritted glass.

The thickness of the sealing layer 11 (the length in the up or down direction) is, for example, 5 to 500 µm, preferably 5 to 100 µm, or more preferably 10 to 50 µm.

In FIG. 1 and FIG. 2, the counter electrode 3 has a cathode-side substrate 8 as the substrate.

Examples of the cathode-side substrate 8 include a flexible film (in the following, referred to as liquid crystal polymer film) formed of a liquid crystal polymer; and a flexible film (in the following, referred to as filler-dispersed film) in which a fine-powder filler is dispersed.

Examples of the liquid crystal polymer include a thermotropic liquid crystal polyester and a thermotropic liquid crystal polyester amide that are synthesized by using compounds [1] to [4] shown below or derivatives thereof as raw materials.

[1] Aromatic or aliphatic dihydroxy compounds (typical examples are shown in the following formulas (1) to (7)) 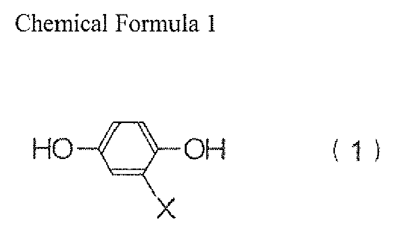 (in the formula (1), X represents an atom such as a hydrogen atom or a halogen atom; or a group such as a lower alkyl group or a phenyl group.) 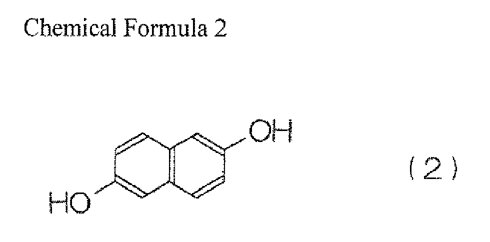 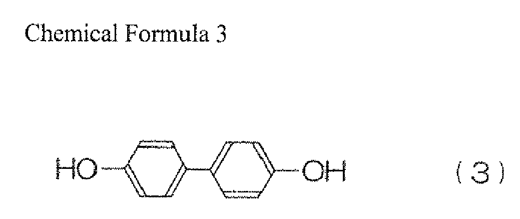 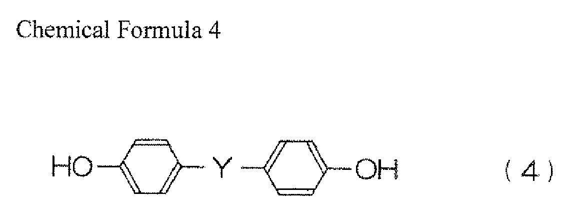 (in the formula (4), Y represents a group such as -O- -CH₂-, or -S-.)

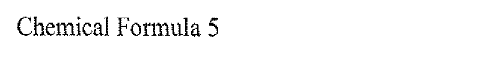

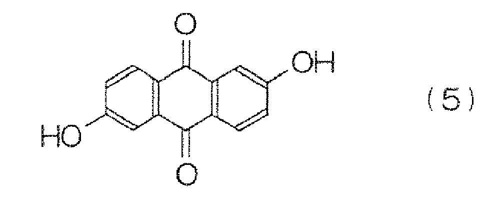

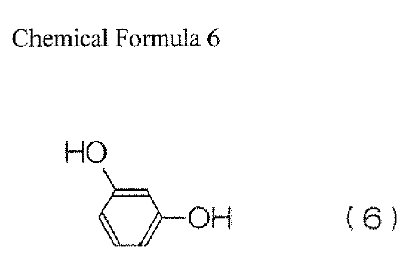

Chemical Formula 7 HO(CH₂)nOH (7)

(in the formula (7), n represents an integer from 2 to 12.)

[2] Aromatic or aliphatic dicarboxylic acid (typical examples are shown in the following formulas (8) to (14))

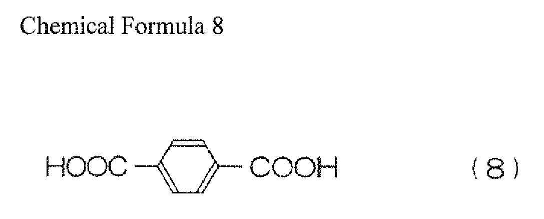

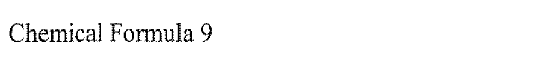

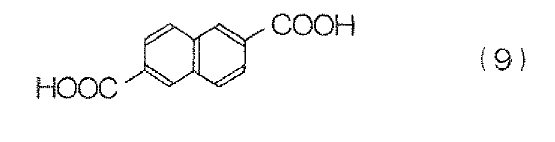

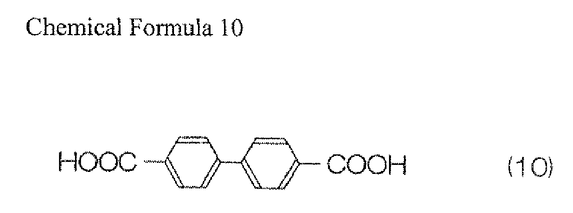

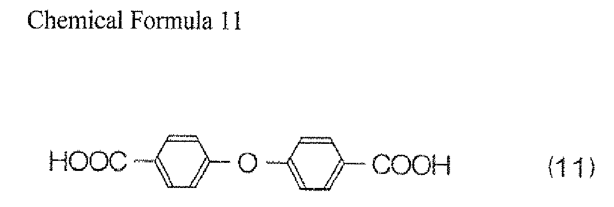

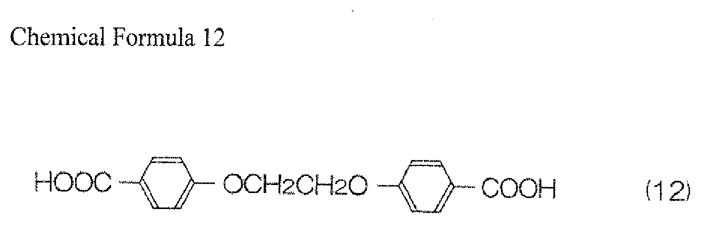

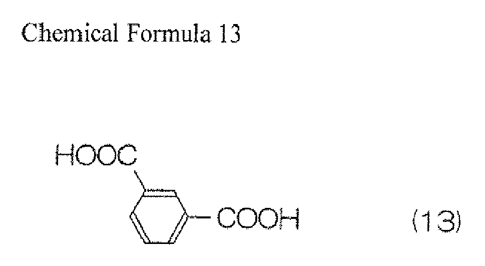

Chemical Formula 14 HOOC(CH₂)nCOOH (14)

(in the formula (14), n represents an integer from 2 to 12.)

[3] Aromatic hydroxycarboxylic acid (typical examples are shown in the following formulas (15) to (18)) 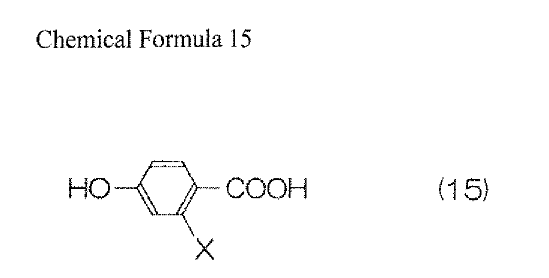 (in the formula (15), X represents an atom such as a hydrogen atom or a halogen atom; or a group such as a lower alkyl group or a phenyl group.)

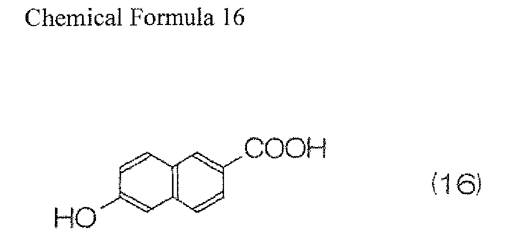

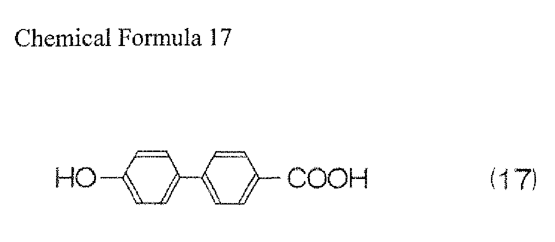

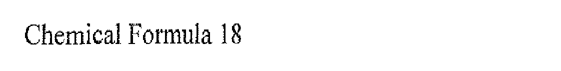

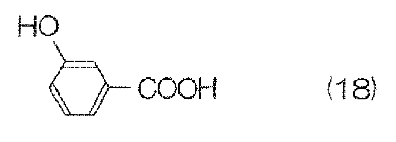

[4] Aromatic diamine, aromatic hydroxyamine or aromatic aminocarboxylic acid (typical examples are shown in the following formulas (19) to (21))

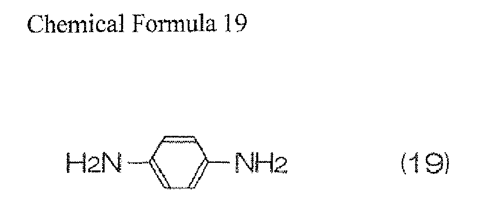

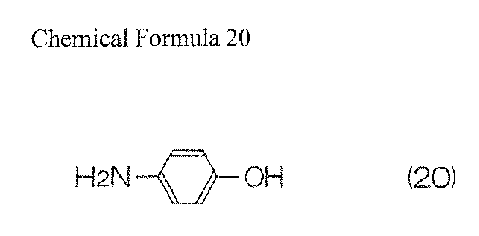

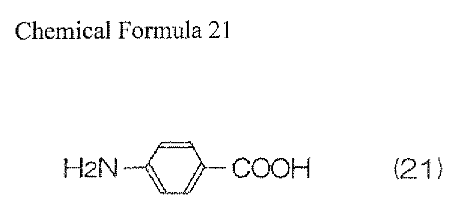

Examples of the liquid crystal polymer preferably include para-hydroxy benzoic acid ester-containing copolymers such as a copolymer (1) containing a unit a and a unit b represented by the following formula (22); a copolymer (2) containing a unit c to a unit e represented by the following formula (23); and a copolymer (3) containing a unit f and a unit g represented by the following formula (24).

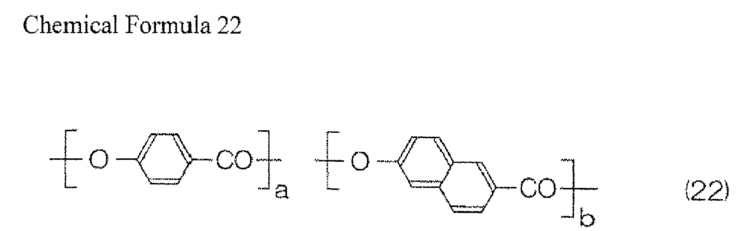

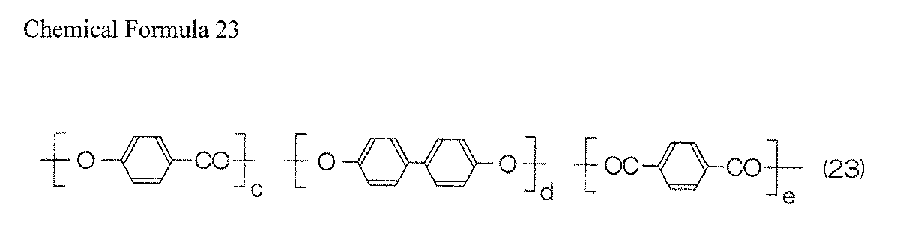

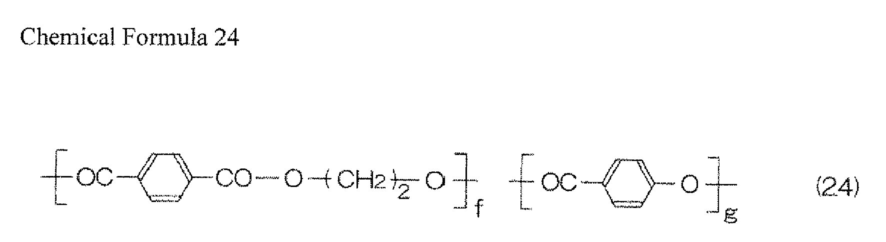

The copolymers (1) to (3) are all synthesized using, for example, a monomer including 50 to 80 mol% of para-hydroxy benzoic acid as a raw material.

To be specific, the copolymer (1) is a polycondensate of para-hydroxybenzoic acid and 2,6-hydroxynaphthoic acid, and preferably contains 50 to 80 mol% of the unit a and 20 to 50 mol% of the unit b.

The copolymer (2) is a polycondensate of para-hydroxybenzoic acid, 4,4'-dihydroxydiphenyl, and terephthalic acid, and preferably contains 50 to 80 mol% of the unit c, 1 to 49 mol% of the unit d, and 1 to 49 mol% of the unit e.

The copolymer (3) is a polycondensate of para-hydroxybenzoic acid and ethylene glycol, and preferably contains 20 to 50 mol% of the unit f, and 50 to 80 mol% of the unit g.

The above-described copolymers (1) to (3) may be used alone, or may be used in combination.

More preferable example of the liquid crystal polymer is the copolymer (1).

As such a liquid crystal polymer film, commercially available ones may be used, including, for example, VECSTAR series (manufactured by Kuraray Co., Ltd.), and BIAC® series (manufactured by Japan Gore-Tex Inc.).

The weight average molecular weight of the liquid crystal polymer is, for example, 10000 to 150000, or preferably 20000 to 70000.

The melting point of the liquid crystal polymer is, for example, 250°C or more, or preferably 280°C or more, and generally 610°C or less.

The water absorption (JIS C-6481, conditions: E-24/50 + D-24/23) of the liquid crystal polymer film is, for example, 5% or less, preferably 1% or less, or more preferably 0.1% or less, and generally 0.001 % or more.

The linear expansion coefficient (50 to 100°C) of the liquid crystal polymer film is, for example, 100 ppm/°C or less, or preferably 50 ppm/°C or less, and generally 0.1 ppm/°C or more.

The filler-dispersed film can be obtained, for example, by blending a fine-powder filler with resin, and molding the filler-containing resin in which the fine-powder filler is blended into a sheet (film).

The fine-powder filler is, for example, a filler having the average particle size of, for example, 500 nm or less. To be specific, examples of the fine-powder filler include oxides such as titanium oxide, magnesium oxide, zinc oxide, silicon oxide (silica, mica powder, and mica), and aluminum oxide (alumina and bentonite); metal carbonates such as calcium carbonate (for example, calcium carbonate heavy, calcium carbonate light, and Hakuenka® (colloidal calcium carbonate)), and sodium carbonate; metal powder such as aluminum powder; talc; clay; and aluminum hydroxide.

These fine-powder fillers may be used alone, or may be used in combination of two or more.

Among these fine-powder fillers, preferably oxide, preferably titanium oxide is used.

The average particle size of the fine-powder filler is, preferably 1 to 500 nm, or more preferably 10 to 300 nm.

The fine-powder filler has a light reflectance of, for example, 30% or more, preferably 40% or more, more preferably 50% or more, or even more preferably 60% or more, and usually 90% or less, at at least one wavelength in the range of 400 to 750 nm. When the reflectance of the fine-powder filler is below the above-described range, the reflectance (described later) of the cathode-side substrate 8 at a specific wavelength may not be set to a specific range.

An example of the resin includes the resins mentioned above as the examples of the plastic material for the above-described anode-side substrate 5. Preferably, polyester resins are used.

The blending proportion of the fine-powder filler is, for example, 1 to 50 parts by weight, preferably 5 to 40 parts by weight, or more preferably 10 to 30 parts by weight relative to 100 parts by weight of the filler-containing resin.

When the blending proportion of the fine-powder filler is below the above-described range, the reflectance (described later) of the cathode-side substrate 8 at a specific wavelength may not be set to a specific range. When the blending proportion of the fine-powder filler exceeds the above-described range, sufficient flexibility may not be given to the cathode-side substrate 8.

To produce the filler-dispersed film, the fine-powder filler is blended with the resin at the above-described proportion, and mixed uniformly. To mix respective components, the above-described components are kneaded, for example, by a mixing roll, a pressure kneader, an extruder, etc. to obtain a kneaded material.

In the kneading, as necessary, heat may be applied, with heating conditions of, for example, 100°C or more, or preferably 200°C or more, and generally 400°C or less.

Thereafter, the obtained kneaded material is molded into a sheet (film), for example, by molding methods such as a mixing roll molding, calender roll molding, extrusion molding, and press molding. The filler-dispersed film is thus produced.

The filler-dispersed film is also produced, by blending the fine-powder filler with raw materials (monomer component) of the above-described resin; afterwards, polymerizing the raw materials to obtain a polymer; and molding the obtained polymer into a sheet (film) by the above-described molding methods. In such a method, the fine-powder filler may also be blended during the polymerization or after the polymerization, instead of blending with the raw materials or along with the blending with the raw materials.

Another example of the cathode-side substrate 8 includes a flexible film (in the following, referred to as filler-containing liquid crystal polymer film) in which a fine-powder filler is dispersed in the liquid crystal polymer.

In the filler-containing liquid crystal polymer film, examples of the liquid crystal polymer include the above-described liquid crystal polymers, and examples of the fine-powder filler include the above-described fine-powder fillers.

In the filler-containing liquid crystal polymer film, the blending proportion of the fine-powder filler is, for example, 1 to 50 parts by weight, preferably 5 to 40 parts by weight, or more preferably 10 to 30 parts by weight relative to 100 parts by weight of the liquid crystal polymer.

The filler-containing liquid crystal polymer film can be produced in the same manner as the production of the above-described filler-dispersed film.

Also, the film molded according to the above-described methods may be oriented as necessary. When the unoriented film is molded into an elongated shape, the orientation is performed so that the draw ratio in the elongation direction is, for example, 1.1 to 5, and the draw ratio in the width direction (direction perpendicular to the elongation direction) is, for example, 1.1 to 5.

The thickness of the thus obtained cathode-side substrate 8 is, for example, 5 to 500 µm, preferably 8 to 100 µm, or more preferably 12 to 50 µm. When the thickness of the cathode-side substrate 8 is below the above-described range, workability may be reduced, and when the thickness of the cathode-side substrate 8 exceeds the above-described range, costs may increase.

The cathode-side substrate 8 reflects sunlight (to be specific, visible light, etc.), and to be specific, has a reflectance of 30% or more, at at least one wavelength in the range of 400 to 750 nm.

To be more specific, the cathode-side substrate 8 has a light reflectance of preferably 35% or more, more preferably 40% or more, or even more preferably 45% or more, and usually 90% or less, at at least one wavelength in the range of 400 to 750 nm.

When the light reflectance at the above-described wavelength is below the above-described range, the light at the above-described wavelength cannot be efficiently reflected in the cathode-side substrate 8, and therefore power generation efficiency cannot be increased efficiently.

The reflectance of the cathode-side substrate 8 can be measured, for example, by a spectrophotometer and the like.

The counter electrode 3 further includes, to be specific, a cathode-side conductive layer 9 as the conductive layer, and a catalyst layer 10.

The cathode-side conductive layer 9 is formed on the cathode-side substrate 8. To be specific, the cathode-side conductive layer 9 is composed of a conductive thin film, and is formed at a widthwise middle portion (center portion) of the upper face of the cathode-side substrate 8. To be specific, the cathode-side conductive layer 9 is included in the dye-sensitized semiconductor layer 7 when projected in the thickness direction thereof, and is formed such that both widthwise end portions of the cathode-side substrate 8 are exposed.

The area of the cathode-side conductive layer 9 is, for example, 1 to 100%, or preferably 1 to 95% relative to the inside area of the cathode-side substrate 8 with respect to the sealing layer 11 (described later).

Examples of the conductive material that forms the cathode-side conductive layer 9 include the conductive materials mentioned above as the conductive materials that form the anode-side conductive layer 6. Preferable examples are gold, silver, copper, platinum, nickel, tin, ITO, FTO, and carbon. Such conductive materials are advantageous in that electrons are efficiently given and received.

These conductive materials may be used alone, or may be used in combination of two or more.

The resistivity of the cathode-side conductive layer 9 is, for example, 1.0 × 10⁻²Ω · cm or less, preferably 1.0 × 10⁻³Ω · cm or less, or more preferably 1.0 × 10⁻⁵Ω · cm or less.

The thickness of the cathode-side conductive layer 9 is, for example, 0.1 to 100 µm, or preferably 1 to 50 µm. When the thickness of the cathode-side conductive layer 9 is below the above-described range, the conductivity may decrease excessively (the resistivity increases excessively), and when the thickness of the cathode-side conductive layer 9 is above the above-described range, costs may increase and it may become difficult to achieve a thin product.

The cathode-side conductive layer 9 has a light reflectance of, for example, 1% or more, preferably 5% or more, or more preferably 10% or more, and usually 99% or less, at at least one wavelength in the range of 400 to 750 nm. Or, the cathode-side conductive layer 9 has a light transmittance of, for example, 0% or more, preferably 10% or more, or more preferably 20% or more, and usually 95% or less, at at least one wavelength in the range of 400 to 750 nm.

When the reflectance of the cathode-side conductive layer 9 is within the above-described range, the cathode-side conductive layer 9 may be capable of efficiently reflecting light having a specific wavelength to improve power generation efficiency.

When the transmittance of the cathode-side conductive layer 9 is within the above-described range, the cathode-side conductive layer 9 can efficiently transmit light having a specific wavelength, and can efficiency reflect light that reached the upper face of the cathode-side substrate 8 covered by the cathode-side conductive layer 9, to improve power generation efficiency.

The catalyst layer 10 is formed on the cathode-side conductive layer 9. To be specific, the catalyst layer 10 is formed on the cathode-side substrate 8 so as to cover the surface (upper face and both widthwise side faces) of the cathode-side conductive layer 9.

The catalyst layer 10 is included in the dye-sensitized semiconductor layer 7 when projected in the thickness direction thereof, and one widthwise side face of the catalyst layer 10 is positioned between one widthwise side face of the dye-sensitized semiconductor layer 7 and one widthwise side face of the cathode-side conductive layer 9. The other widthwise side face of the catalyst layer 10 is positioned between the other widthwise side face of the dye-sensitized semiconductor layer 7 and the other widthwise side face of the cathode-side conductive layer 9.

The area of the catalyst layer 10 is, for example, 1 to 100%, or preferably 5 to 100% relative to the inside area of the cathode-side substrate 8 with respect to the sealing layer 11. The area of the catalyst layer 10 relative to the area of the cathode-side conductive layer 9 is, for example, 10 to 500%, or preferably 50 to 500%.

Examples of the material that forms the catalyst layer 10 include noble metal materials such as platinum, ruthenium, and rhodium; conductive organic materials such as polydioxythiophene and polypyrrole; and a carbon material such as carbon. Preferable examples are platinum and carbon. Such materials are advantageous in that electrons are efficiently given and received.

These materials may be used alone, or may be used in combination of two or more.

The thickness of the catalyst layer 10 is, for example, 50 nm to 100 µm, or preferably 100 nm to 50 µm. When the thickness of the catalyst layer 10 is below the above-described range, in the electrolyte 4, acceleration of oxidation-reduction reaction by electrolyte may not be achieved sufficiently, and power generation efficiency may decrease. When the thickness of the catalyst layer 10 exceeds the above-described range, costs may increase.

The catalyst layer 10 has a light reflectance of, for example, 0% or more, preferably 10% or more, or more preferably 20% or more, and usually 95% or less, at at least one wavelength in the range of 400 to 750 nm. Or, the catalyst layer 10 has a light transmittance of, for example, 0% or more, preferably 10% or more, or more preferably 20% or more, and usually 95% or less, at at least one wavelength in the range of 400 to 750 nm.

When the reflectance of the catalyst layer 10 is within the above-described range, the catalyst layer 10 can efficiently reflect light having a specific wavelength, to improve power generation efficiency.

When the transmittance of the catalyst layer 10 is within the above-described range, the catalyst layer 10 can efficiently transmit light having a specific wavelength, and efficiently reflect light that reached the upper face of the cathode-side substrate 8 covered by the catalyst layer 10, to improve power generation efficiency.

The thickness of the counter electrode 3 is, for example, 10 to 1000 µm, or preferably 10 to 500 µm.

To produce the dye-sensitized solar cell 1, first, the working electrode 2, the counter electrode 3, and the electrolyte 4 are prepared (or made).

The working electrode 2 is made by sequentially laminating the anode-side substrate 5, the anode-side conductive layer 6, and the dye-sensitized semiconductor layer 7 downward in the thickness direction.

The electrolyte 4 is prepared as the above-described liquid electrolyte or a gelled electrolyte.

To produce the counter electrode 3, first, the cathode-side substrate 8 is prepared or made.

Next, as necessary, a surface treatment is given to the upper face of the cathode-side substrate 8 by a plasma treatment or a physical vapor deposition method. Such surface treatments may be given singly or in combination of two or more.

Examples of the plasma treatment include a nitrogen plasma treatment. Conditions of the nitrogen plasma treatment are noted below.
Pressure (reduced pressure) : 0.01 to 100 Pa, or preferably 0.05 to 10 Pa
Flow rate of nitrogen introduced : 10 to 1000 SCCM (standard cc/min), or preferably 10 to 300 SCCM
Treatment temperature : 0 to 150°C, or preferably 0 to 120°C
Electric power : 30 to 1800W, or preferably 150 to 1200W
Treatment time : 0.1 to 30 minutes, or preferably 0.15 to 10 minutes
The nitrogen plasma treatment causes the upper face of the cathode-side substrate 8 to be nitrogenized.
Examples of the physical vapor deposition method include vacuum deposition, ion plating, and sputtering. A preferable example is sputtering.

Examples of the sputtering include a metal sputtering using metals such as nickel or chromium as a target. By metal sputtering, a metal thin film (not shown) is formed on the upper face of the cathode-side substrate 8. The thickness of the metal thin film is, for example, 1 to 1000 nm, or preferably 10 to 500 nm.

The above-described surface treatment allows an improvement in adhesion of the cathode-side conductive layer 9 to the cathode-side substrate 8.

Next, the cathode-side conductive layer 9 is formed on the cathode-side substrate 8.

The cathode-side conductive layer 9 is formed, for example, by a printing method, a spraying method, a physical vapor deposition method, an additive method, or a subtractive method, into the above-described pattern.

In the printing method, for example, a paste containing microparticles of the above-described conductive material is screen printed on the upper face of the cathode-side substrate 8, into the above-described pattern.

In the spraying method, for example, a dispersion of the above-described conductive material microparticles dispersed in a known dispersion medium is prepared first. Also, a mask having a predetermined pattern of opening is used to cover the upper face of the cathode-side substrate 8. Afterwards, from above the cathode-side substrate 8 and the mask, the prepared dispersion is blown (sprayed). Afterwards, the mask is removed and the dispersion medium is evaporated.

As the physical vapor deposition method, sputtering is preferably used. To be specific, after covering the upper face of the cathode-side substrate 8 with a mask having a predetermined pattern of opening, sputtering is performed using, for example, metal materials or metal oxide materials as a target, and then the mask is removed.

In the additive method, for example, a thin conductive film (seed film), which is not shown, is formed first on the upper face of the cathode-side substrate 8. As the thin conductive film, a chromium thin film is laminated by sputtering, or preferably by chromium sputtering. When the metal thin film is already formed by the above-described surface treatment (physical vapor deposition method), the formation of the thin conductive film can also serve as a surface treatment for the cathode-side substrate 8.

Then, after forming a plating resist having a reverse pattern to the above-described pattern on the upper face of the thin conductive film, the cathode-side conductive layer 9 is formed on the upper face of the thin conductive film exposing from the plating resist by electrolytic plating. Afterwards, the plating resist and the portion of the thin conductive film where the plating resist was laminated are removed.

In the subtractive method, for example, a two-layer substrate (copper-clad two-layer substrate, etc.) in which a conductive foil composed of the above-described conductive material is laminated on the upper face of the cathode-side substrate 8 in advance is prepared first, and after a dry film resist is laminated on the conductive foil, the dry film resist is exposed to light and developed so that an etching resist having the same pattern as that of the above-described cathode-side conductive layer 9 is formed. Afterwards, the conductive foil exposing from the etching resist is subjected to a chemical etching using an etching solution such as an aqueous solution of ferric chloride, and then the etching resist is removed.

For the preparation of the two-layer substrate, a conductive foil may be bonded to the upper face of the cathode-side substrate 8 by heat-fusing, or a known adhesive layer may be interposed between the cathode-side substrate 8 and the conductive foil.

Upon forming the cathode-side conductive layer 9 by the above-described subtractive method, a commercially available product may be used as the copper-clad two-layer substrate. For example, a liquid crystal polymer copper-clad laminate plate in which a copper foil is laminated on the upper face of the liquid crystal polymer film in advance, such as ESPANEX L series (standard type /P type, manufactured by Nippon Steel Chemical Co., Ltd.), or BIAC®-RF-Clad series (manufactured by Japan Gore-Tex Inc.) is used.

Then, the catalyst layer 10 is formed on the cathode-side substrate 8 so as to cover the cathode-side conductive layer 9.

The catalyst layer 10 is formed, for example, by a known method such as a printing method, a spraying method, or a physical vapor deposition method, into the above-described pattern. The printing method, the spraying method, and the physical vapor deposition method can be performed according to the above-described method.

Preferably, when the catalyst layer 10 is to be formed from a noble metal, a physical vapor deposition method (for example, vacuum deposition, sputtering, etc.) is used; and when the catalyst layer 10 is to be formed from a conductive organic compound or a carbon material, a printing method or a spraying method is used.

The counter electrode 3 is thus made.

Then, the working electrode 2 and the counter electrode 3 are disposed to face each other so that the dye-sensitized semiconductor layer 7 and the catalyst layer 10 are adjacent to each other, with a space for providing the sealing layer 11 therebetween. At the same time, the sealing layer 11 is provided on one widthwise side of the working electrode 2 and the counter electrode 3, and after pouring in the electrolyte 4 between the working electrode 2 and the counter electrode 3, the sealing layer 11 is further provided on the other widthwise side of the working electrode 2 and the counter electrode 3, thus sealing in the electrolyte 4.

### Although not shown in the drawings, upon providing the sealing layer 11, the sealing layers 11 are provided also at both anteroposterior (direction perpendicular to the width direction and the thickness direction) sides so as to seal in the electrolyte 4.

The dye-sensitized solar cell 1 is thus made.

In the thus obtained dye-sensitized solar cell 1, the counter electrode 3 includes the cathode-side substrate 8 that has a light reflectance at a specific wavelength in a specific range. Therefore, sunlight containing light of a specific wavelength can be reflected at the counter electrode 3 with excellent efficiency, and the reflected sunlight can be used again for electron generation in the working electrode 2. As a result, power generation efficiency can be improved.

Furthermore, because the cathode-side substrate 8 has a reflectance of a specific range, the light reflection layer or light scattering reflection layer of Patent Document 1 or 2 does not have to be provided additionally, and power generation efficiency can be increased with a simple structure. Therefore, steps for producing the light reflection layer or light scattering reflection layer can be omitted, and power generation efficiency as well as further low-costs can be achieved with a simple structure.

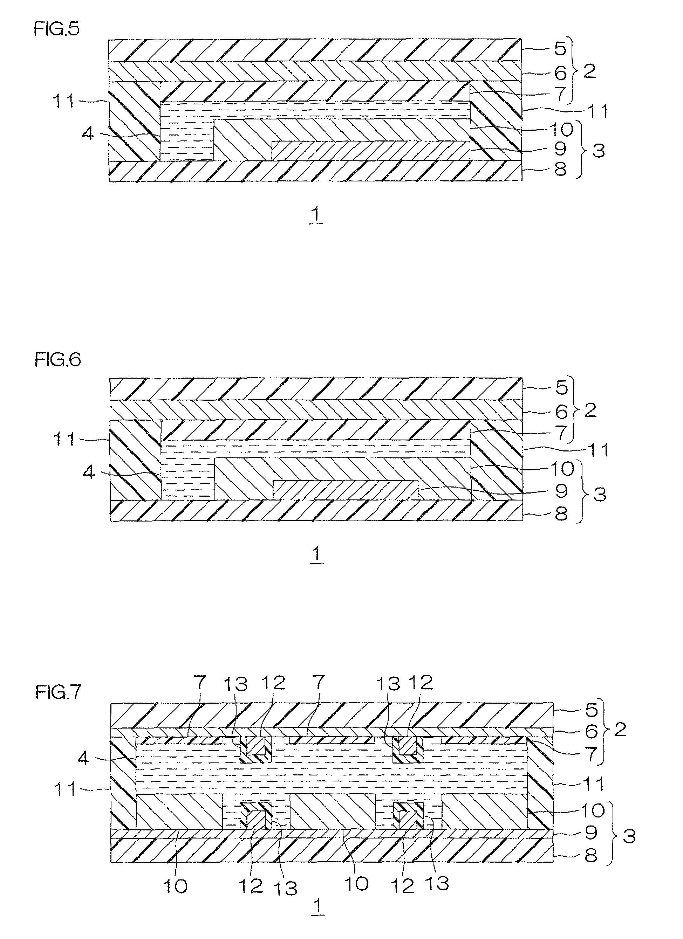

FIG. 3 shows a cross-sectional view of a counter electrode (an embodiment in which the cathode-side substrate and the cathode-side conductive layer are included) in another embodiment of the dye-sensitized solar cell of the present invention. FIGs. 4 to 7 show cross-sectional views of other embodiments of the dye-sensitized solar cell of the present invention. FIG. 4 shows an embodiment in which the cathode-side conductive layer is interposed between the cathode-side substrate and the electrolyte; FIG. 5 shows an embodiment in which a left-side portion of the upper face of the cathode-side substrate exposing from the catalyst layer is in contact with the electrolyte, and the right side faces of the cathode-side conductive layer and the catalyst layer are in contact with the sealing layer; FIG. 6 shows an embodiment in which a left-side portion of the upper face of the cathode-side substrate exposing from the catalyst layer is in contact with the electrolyte, and the right side face of the catalyst layer is in contact with the sealing layer; and FIG. 7 shows an embodiment in which the anode-side conductive layer and the cathode-side conductive layer are connected to current collecting wirings.

In the following figures, the members corresponding to the components mentioned above are designated by the same reference numerals, and detailed descriptions thereof are omitted.

Although the catalyst layer 10 is provided in the counter electrode 3 in the above description, for example, as shown in FIG. 3, the counter electrode 3 may also be formed from the cathode-side substrate 8 and the cathode-side conductive layer 9, without using the catalyst layer 10.

The cathode-side conductive layer 9 may also serve as the catalyst layer 10. In such a case, the cathode-side conductive layer 9 is preferably formed from a carbon material such as carbon.

Although the portion of the upper face of the cathode-side substrate 8 exposing from the cathode-side conductive layer 9, the catalyst layer 10, and the sealing layer 11 is in contact with the electrolyte 4 in the above description, for example, as shown in FIG. 4, by forming the cathode-side conductive layer 9 so as to bring both widthwise side faces of the cathode-side conductive layer 9 into contact with inner side faces of the sealing layer 11, the entirety of the upper face of the cathode-side substrate 8 can be covered with the cathode-side conductive layer 9 and the sealing layer 11.

In FIG. 4, the cathode-side conductive layer 9 is formed, so as to extend between the sealing layers 11 in the widthwise direction. That is, when the cathode-side conductive layer 9 is projected in the thickness direction thereof, position of the both widthwise side faces thereof coincides with the position of the both widthwise side faces of the dye-sensitized semiconductor layer 7. That is, the cathode-side conductive layer 9 is interposed between the cathode-side substrate 8, and the electrolyte 4 and catalyst layer 10.

The catalyst layer 10 is formed at a widthwise middle portion (center portion) of the upper face of the cathode-side conductive layer 9. That is, both widthwise end portions of the upper face of the cathode-side conductive layer 9 is exposed from the catalyst layer 10.

The area of the catalyst layer 10 is, for example, 5 to 99%, or preferably 10 to 90% relative to the inside area of the cathode-side substrate 8 with respect to the sealing layer 11 (that is, the area of the cathode-side conductive layer 9).

It is also possible, as shown in FIG. 5, to form the cathode-side conductive layer 9 and the catalyst layer 10 so as to bring one widthwise side (right) faces of the cathode-side conductive layer 9 and the catalyst layer 10 in contact with the inside (left) face of the one (right) widthwise side of the sealing layer 11.

In FIG. 5, the area of the cathode-side conductive layer 9 is, for example, 5 to 95%, or preferably 5 to 90% relative to the inside area of the cathode-side substrate 8 with respect to the sealing layer 11.

The area of the catalyst layer 10 is, for example, 10 to 99%, or preferably 10 to 95% relative to the inside area of the cathode-side substrate 8 with respect to the sealing layer 11. The area of the catalyst layer 10 is, for example, 101 to 1900%, or preferably 101 to 500% relative to the area of the cathode-side conductive layer 9.

Furthermore, as shown in FIG. 6, it is also possible to form the catalyst layer 10 so that the one widthwise side (right) face of the catalyst layer 10 is brought in contact with the inside (left) face of the one (right) widthwise side of the sealing layer 11.

In FIG. 6, the area of the cathode-side conductive layer 9 is, for example, 10 to 90%, or preferably 15 to 85% relative to the inside area of the cathode-side substrate 8 with respect to the sealing layer 11.

The area of the catalyst layer 10 is, for example, 15 to 95%, or preferably 20 to 95% relative to the inside area of the cathode-side substrate 8 with respect to the sealing layer 11. The area of the catalyst layer 10 is, for example, 115 to 950%, or preferably 120 to 800% relative to the area of the cathode-side conductive layer 9.

Furthermore, as shown in FIG. 7, it is also possible to provide a plurality of dye-sensitized semiconductor layers 7 and a plurality of catalyst layers 10 along the width direction thereof, together with current collecting wirings 12 between the plurality of dye-sensitized semiconductor layers 7 and between the plurality of catalyst layers 10.

Each of the plurality of dye-sensitized semiconductor layers 7 and each of the plurality of catalyst layers 10 are aligned in the width direction thereof with a space therebetween, and are at matching positions when the each of the plurality of dye-sensitized semiconductor layers 7 and the each of the plurality of catalyst layers 10 are projected in the thickness direction thereof.

The anode-side conductive layer 6 is formed below the entire lower face of the anode-side substrate 5.

The cathode-side conductive layer 9 is formed above the entire face of the cathode-side substrate 8.

In the working electrode 2, the plurality of current collecting wirings 12 are formed between the each of the plurality of dye-sensitized semiconductor layers 7 at the lower face of the anode-side conductive layer 6, and each of the plurality of current collecting wirings 12 is disposed in the width direction thereof with a space between the each of the plurality of current collecting wirings 12 and the each of the plurality of dye-sensitized semiconductor layers 7. The current collecting wirings 12 in the working electrode 2 are electrically connected to the anode-side conductive layer 6.

In the counter electrode 3, the plurality of current collecting wirings 12 are formed between the each of the catalyst layers 10 on the upper face of the cathode-side conductive layer 9, and the each of the current collecting wirings 12 is disposed in the width direction thereof with a space between the each of the catalyst layers 10. The current collecting wirings 12 in the counter electrode 3 are electrically connected to the cathode-side conductive layer 9.

The area of the current collecting wirings 12 is, for example, 1 to 50%, or preferably 1 to 20% relative to the inside area of the cathode-side substrate 8 with respect to the sealing layer 11.

The area of the catalyst layer 10 is, for example, 10 to 95%, or preferably 20 to 95% relative to the inside area of the cathode-side substrate 8 with respect to the sealing layer 11. The area of the catalyst layer 10 is, for example, 10 to 95%, or preferably 20 to 95% relative to the area of the cathode-side conductive layer 9 (that is, the area of the cathode-side substrate 8).

As conductive materials for forming the current collecting wirings 12, those conductive materials as described above may be used. The thickness of the current collecting wirings 12 is, for example, 0.5 to 50 µm, or preferably 0.5 to 20 µm.

On the surface of the current collecting wirings 12, a protection layer 13 is formed for preventing corrosion of the current collecting wirings 12 by the electrolyte 4.

Examples of the material for forming the protection layer 13 include resin materials such as epoxy resin and acrylic resin, and metal materials such as nickel and gold. The thickness of the protection layer 13 is, for example, 0.5 to 30 µm.

In such dye-sensitized solar cells 1, power generation efficiency can be improved by collecting electric currents of the plurality of anode-side conductive layers 6 and of the cathode-side conductive layers 9 with the plurality of current collecting wirings 12.

### Examples

### Example 1

A cathode-side substrate composed of a liquid crystal polymer film (VECSTAR, thickness 25 µm, manufactured by Kuraray Co., Ltd.) was prepared (ref. FIG. 2).

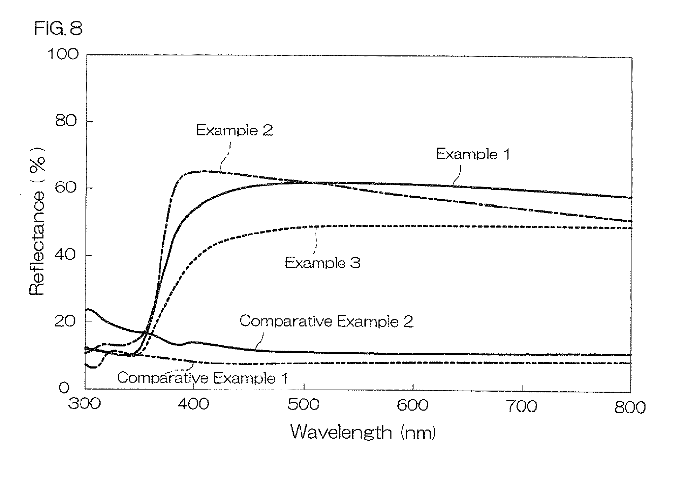

The light reflectance of the prepared cathode-side substrate at a wavelength in the range of 300 to 800 nm was measured with a spectrophotometer (V-670, manufactured by JASCO Corporation). The results are shown in FIG. 8.

The cathode-side substrate has a melting point of 295°C, a water absorption (JIS C-6481, conditions: E-24/50 + D-24/23) of 0.04%, and a linear expansion coefficient (50 to 100°C) of 17 ppm/°C.

Then, the upper face of the cathode-side substrate was subjected to a nitriding treatment by a nitrogen plasma treatment. Conditions for the nitrogen plasma treatment are noted below.

| | |
|---|---|
| Pressure (reduced pressure) : | 1.2 Pa |
| Flow rate of nitrogen introduced : | 70 SCCM |
| Treatment Temperature : | 21°C |
| Electric Power : | 200W |
| Treatment Time : | 0.5 minutes |

Then, a cathode-side conductive layer composed of copper was formed into the above-described pattern by an additive method (ref. FIG. 2).

That is, a thin conductive film composed of a chromium thin film having a thickness of 100 nm was formed first on the upper face of the cathode-side substrate by chromium sputtering. Then, after a plating resist was formed on the upper face of the thin conductive film in a pattern reverse to the above-described pattern, a cathode-side conductive layer having a thickness of 18 µm was formed on the surface of the thin conductive film exposing from the plating resist by electrolytic copper plating. Afterwards, the plating resist and the portion of the thin conductive film where the plating resist was laminated were removed.

The cathode-side conductive layer had a resistivity of 1.76 × 10⁻⁶Ω · cm. The area of the cathode-side conductive layer was 50% relative to the area of the cathode-side substrate.

Afterwards, a catalyst layer composed of carbon was formed on the cathode-side substrate by the printing method in a pattern covering the surface of the cathode-side conductive layer.

That is, a carbon paste was screen printed in the above-described pattern to form a catalyst layer having a thickness of 20 µm (ref: FIG. 2).

The area of the catalyst layer was 60% relative to the area of the cathode-side substrate, and 120% relative to the area of the cathode-side conductive layer.

The counter electrode having a thickness of 63 µm shown in FIG. 2 was thus made.

### Example 2

A counter electrode was made in the same manner as in Example 1, except that in the preparation of the cathode-side substrate, a filler-dispersed film (Diafoil® W-100, thickness 50 µm, manufactured by Mitsubishi Plastics, Inc.) was used instead of the liquid crystal polymer film (VECSTAR, thickness 25 µm, manufactured by Kuraray Co., Ltd.).

This filler-dispersed film (Diafoil®W-100) is a sheet obtained by blending titanium oxide with PET.

The light reflectance of the prepared cathode-side substrate at a wavelength in the range of 300 to 800 nm was measured with a spectrophotometer (V-670, manufactured by JASCO Corporation). The results are shown in FIG. 8.

The cathode-side substrate had a water absorption (JIS C-6481, conditions: E-24/50 + D-24/23) of 0.4%, and a linear expansion coefficient (50 to 100°C) of 15 ppm/°C.

### Example 3

A counter electrode was made in the same manner as in Example 1, except that a liquid crystal polymer film (BIAC, thickness 25 µm, manufactured by JAPAN GORE-TEX INC.) was used instead of the liquid crystal polymer film (VECSTAR, thickness 25 µm, manufactured by Kuraray Co., Ltd.).

The light reflectance of the prepared cathode-side substrate at a wavelength in the range of 300 to 800 nm was measured with a spectrophotometer (V-670, manufactured by JASCO Corporation). The results are shown in FIG. 8.

The cathode-side substrate had a water absorption (JIS C-6481, conditions: E-24/50 + D-24/23) of 0.04%, and a linear expansion coefficient (50 to 100°C) of 16 ppm/°C.

### Comparative Example 1

A counter electrode was made in the same manner as in Example 1, except that in the preparation of the cathode-side substrate, a PET film (Product Name "Tetoron®", thickness 25 µm, manufactured by Teijin DuPont Films Japan Limited) was used instead of the liquid crystal polymer film (VECSTAR, thickness 25 µm, manufactured by Kuraray Co., Ltd.).

The light reflectance of the prepared cathode-side substrate at a wavelength in the range of 300 to 800 nm was measured with a spectrophotometer (V-670, manufactured by JASCO Corporation). The results are shown in FIG. 8.

The cathode-side substrate had a water absorption (JIS C-6481, conditions: E-24/50 + D-24/23) of 0.4%, and a linear expansion coefficient (50 to 100°C) of 15 ppm/°C.

### Comparative Example 2

A counter electrode was made in the same manner as in Example 1, except that in the preparation of the cathode-side substrate, a PEN film (Teonex® Q51, thickness 25 µm, manufactured by Teijin DuPont Films Japan Limited) was used instead of the liquid crystal polymer film (VECSTAR, thickness 25 µm, manufactured by Kuraray Co., Ltd.).

The light reflectance of the prepared cathode-side substrate at a wavelength in the range of 300 to 800 nm was measured with a spectrophotometer (V-670, manufactured by JASCO Corporation). The results are shown in FIG. 8.

The cathode-side substrate had a water absorption (JIS C-6481, conditions: E-24/50 + D-24/23) of 0.3%, and a linear expansion coefficient (50 to 100°C) of 13 ppm/°C.

Table 1 shows details of the cathode-side substrates in Examples and Comparative Examples.

**Table 1**

| Examples And Comparative Examples | Cathode-Side Substrate | | |
|---|---|---|---|
| | Flexible Film | | |
| | | Resin | Fine-Powder Filler |
| Example 1 | Liquid Crystal Polymer Film*¹ | Liquid Crystal Polymer | - |
| Example 2 | Filler-Dispersed Film*² | PET | Titanium Oxide |
| Example 3 | Liquid Crystal Polymer Film*³ | Liquid Crystal Polymer | - |
| Comparative Example 1 | Plastic Film | PET | - |
| Comparative Example 2 | Plastic Film | PEN | - |

| | | | |
|---|---|---|---|
| * 1:VECSTAR, manufactured by Kuraray Co., Ltd. *2:Diafoil® W-100, manufactured by Mitsubishi Plastics, Inc. *3:BIAC, manufactured by JAPAN GORE-TEX INC. | | | |

## Claims

1. A dye-sensitized solar cell comprising:
a working electrode, a counter electrode that is disposed to face the working electrode with a space therebetween, and an electrolyte that fills in between the working electrode and the counter electrode, wherein the counter electrode includes a substrate having a light reflectance of 30% or more at at least one wavelength in the range of 400 to 750 nm.

2. The dye-sensitized solar cell according to Claim 1, wherein the substrate is a flexible film formed of a liquid crystal polymer.

3. The dye-sensitized solar cell according to Claim 1, wherein the substrate is a flexible film in which a fine-powder filler is dispersed.

4. The dye-sensitized solar cell according to Claim 3, wherein the fine-powder filler is titanium oxide.
